# DEMANDE DE BREVET EUROPEEN

(11) **EP 4 642 080 A1**
(43) Date de publication de la demande: **29.10.2025**
(21) Numéro de dépôt: 24315208.9
(22) Date de dépôt: 22.04.2024
(51) Int. Cl.: H04W 24/02

(54) **PROCÉDÉ ET SYSTÈME DE GESTION D'UN RÉSEAU CELLULAIRE MOBILE, ET RÉSEAU CELLULAIRE MOBILE METTANT EN OEUVRE UN TEL PROCÉDÉ OU SYSTÈME**

(71) Demandeur: BULL SAS, 78340 Les Clayes-Sous-Bois (FR)
(72) Inventeur: Cortial, François, 13510 Eguilles (FR); Dubois, François, 60730 Cauvigny (FR); Wensink, Emmanuel, 3006 Berne (CH)
(74) Mandataire: IPAZ

(57) **Abrégé**

L'invention concerne un procédé (100) de gestion d'un réseau cellulaire mobile comprenant des stations de base dont au moins une est une station de base mobile, ledit procédé (100) comprenant au moins une itération des étapes suivantes :
-collecte (110) d'au moins un indicateur de fonctionnement relatif à au moins une desdites stations de base ;
-détermination (112), en fonction d'indicateur(s) de fonctionnement collecté(s), d'une action de reconfiguration d'au moins une desdites stations de base ; et
reconfiguration (118) de ladite au moins une station de base.

Elle concerne également un système comprenant des moyens configurés pour mettre en oeuvre ce procédé.

## Description

La présente invention concerne un procédé de gestion d'un réseau cellulaire mobile comprenant au moins une station de base mobile. Elle concerne également un système mettant en oeuvre un tel procédé. Elle concerne en outre un réseau cellulaire mettant en oeuvre un tel procédé, ou comprenant un tel système.

Le domaine de l'invention est de manière générale le domaine de la gestion du fonctionnement des réseaux cellulaires mobiles dans l'espace.

### État de la technique

Un réseau cellulaire est déployé sur une zone géographique donnée. Il est constitué de stations de base. Chaque station de base peut gérer une ou plusieurs cellules.

Un réseau cellulaire mobile comprend au moins une station de base qui est mobile et optionnellement au moins une station de base fixe. Chaque station de base mobile est un équipement installé sur un porteur mobile, tel qu'une personne physique, un véhicule terrestre, un véhicule aérien, un navire maritime, etc.

Les porteurs mobiles évoluent dans une zone d'intervention de sorte que la position géographique de la station de base installée sur ledit porteur change : dans ce cas, il n'est pas toujours possible, voire il est rarement possible, de prévoir à l'avance la trajectoire d'un porteur mobile. Cela présente un risque d'interférence sur les communications cellulaires gérées par deux stations de base mobiles, ou une station de base mobile et une station de base fixe, lors du mouvement des porteurs mobiles. Ces interférences peuvent conduire à une dégradation partielle ou totale de service, en particulier lorsque les stations de base utilisent une même bande de fréquence, ou des bandes de fréquence qui se chevauchent.

Dans le cas de réseaux cellulaires statiques, ces interférences peuvent être évitées ou supprimées, par une planification appropriée et une configuration en conséquence des stations de base (fréquence, puissance, règles de partage du spectre, etc.). Il n'existe actuellement aucune solution pour la gestion efficace de ces interférences dans le cas de réseaux cellulaires mobiles, en particulier lorsque la trajectoire d'un ou plusieurs porteurs mobiles n'est pas déterminable à l'avance.

Un but de la présente invention est de remédier à au moins un des inconvénients précités.

Un autre but de l'invention est de proposer une solution permettant d'éviter ou de diminuer les interférences entre les stations de base d'un réseau cellulaire mobile et/ou entre appareils cellulaires, en particulier pour le sens de communication montant et/ou le sens de communication descendant.

### Exposé de l'invention

L'invention propose d'atteindre au moins l'un des buts précités par un procédé de gestion d'un réseau cellulaire mobile comprenant des stations de base dont au moins une est une station de base mobile, ledit procédé comprenant au moins une itération des étapes suivantes :
- collecte d'au moins un indicateur de fonctionnement relatif à au moins une desdites stations de base ;
- détermination, en fonction d'indicateur(s) de fonctionnement collecté(s), d'une action de reconfiguration d'au moins une desdites stations de base ; et
- reconfiguration de ladite au moins une station de base.

L'invention propose donc de collecter un ou plusieurs indicateurs de fonctionnements relatifs à une ou plusieurs stations du réseau cellulaire mobile. En prenant en compte ces indicateurs de fonctionnement, il est possible de déterminer une ou des actions de reconfiguration, pour une ou plusieurs stations de base, permettant d'ajuster le fonctionnement de ces stations de base à l'évolution du réseau cellulaire mobile dans le temps et dans l'espace. Ainsi, il est possible de mettre en oeuvre des actions permettant soit d'empêcher la survenue d'interférences, et/ou d'éliminer et/ou de diminuer rapidement et efficacement des interférences lors de communications cellulaires au sein d'un réseau cellulaire mobile.

Ainsi, l'invention permet de gérer de manière efficace, rapide et individualisée, le fonctionnement d'un réseau cellulaire mobile, et ce au fur et à mesure que ledit réseau cellulaire évolue.

Par « appareil cellulaire » on entend un appareil de communication cellulaire. Sans perte de généralité, un tel appareil peut en particulier être un appareil utilisateur, par exemple un appareil de type téléphone mobile, Smartphone, modem cellulaire, etc.

Par « communication cellulaire », on entend tout type de communication cellulaire, tel qu'un appel téléphonique, un chargement de données au travers du réseau cellulaire, etc. Suivant des exemples de réalisation non limitatifs, une communication cellulaire peut être une communication utilisant les normes 3GPP (ou d'autres organismes tels que UIT, ETSI, ARIB/TTC, CCSA, ATIS, TTA, IEEE) de réseau cellulaire 2G (par exemple) GSM/GPRS, 3G (par exemple UMTS), 4G (par exemple LTE), 5G (par exemple NR), 6G, WiFi, Wimax, et les futures générations.

Par « réseau cellulaire mobile », un réseau cellulaire comprenant au moins une station de base mobile. Le réseau cellulaire mobile peut comprendre uniquement des stations de base mobiles, ou au moins une station de base mobile et au moins une station de base statique.

Par « station de base statique », on entend une station de base dont la position dans l'espace ne change pas. Une telle station peut par exemple être agencée sur un porteur statique, tel qu'un poteau, un bâtiment etc.

Par « station de base mobile », par opposition à une station de base statique, on entend une station de base dont la position dans l'espace change. En d'autres termes, la station de base mobile peut se déplacer, être déplacé, dans l'espace. Une station base de mobile peut par exemple être agencée sur un porteur mobile.

Par « porteur mobile », on entend tout type de porteur de station de base, se déplaçant dans l'espace, tel qu'une personne physique, un véhicule, et en particulier un véhicule terrestre, un véhicule volant, un véhicule maritime, etc.

Par « interférence », on entend une interférence entre appareils cellulaires, ou une interférence entre un appareil cellulaire et une station de base, ou encore une interférence entre stations de base, lors de communication(s) cellulaire dans le sens de communication montant et/ou dans le sens de communication descendant. Par exemple, une interférence peut exister entre :
- deux appareils cellulaires rattachés à deux stations de base différentes ;
- un appareil cellulaire rattaché à une station de base et une autre station de base ;
- deux stations de base ;

Par « indicateur de fonctionnement relatif à une station de base », on entend :
- un indicateur de fonctionnement de ladite station de base : dans ce cas, par exemple, cet indicateur peut être mesuré, ou déterminé, au niveau de ladite station de base, ou
- un indicateur de fonctionnement d'au moins un appareil cellulaire, et en particulier de tous les appareils cellulaires, rattaché(s) à ladite station de base : dans ce cas, par exemple, cet indicateur peut être mesuré, ou déterminé, au niveau dudit appareil utilisateur et transmis à ladite station de base.

Le procédé selon l'invention peut comprendre une collecte d'indicateur(s) de fonctionnement relatif à toutes les stations de base du réseau cellulaire mobile.

Dans ce cas, quelle que soit la nature de la station de base, fixe ou mobile, ladite station de base est concernée par la collecte d'indicateur(s) de fonctionnement.

Alternativement, le procédé selon l'invention peut comprendre une collecte d'indicateur(s) de fonctionnement relatif à une partie uniquement des stations de base du réseau cellulaire mobile.

Par exemple, le procédé selon l'invention peut comprendre une collecte d'indicateur(s) de fonctionnement relatif uniquement aux stations de base mobiles du réseau cellulaire mobile. Dans ce cas, aucun indicateur de fonctionnement n'est collecté en ce qui concerne les stations de base fixe faisant partie du réseau cellulaire mobile.

L'au moins un indicateur de fonctionnement relatif à une station de base peut être de toute nature.

De préférence, l'au moins un indicateur de fonctionnement relatif à une station de base peut comprendre une information relative à, ou peut être représentative de :
- une présence ou non, ou
- un risque de survenue ou non ;
d'une interférence.

Suivant des modes de réalisation, pour au moins une station de base, l'au moins un indicateur de fonctionnement collecté peut être la position géographique de ladite station de base, ou d'au moins un appareil cellulaire rattaché à ladite station de base.

En effet, en utilisant la position géographique d'une station de base, ou d'un ou plusieurs appareils cellulaires rattachés à ladite station de base, il est possible de déterminer la présence ou non d'une interférence, ou de détecter un risque d'interférence, par exemple :
- en coordonnant cette information de localisation avec une information externe, telle que comme la cartographie, des informations de préparation de mission, etc ; et/ou
- par une simulation électromagnétique.

Suivant des modes de réalisation, pour au moins une station de base, un indicateur de fonctionnement collecté peut être un indicateur de qualité relatif à une communication entre ladite station de base et au moins un appareil cellulaire rattaché à ladite station de base.

De tels indicateurs de qualité sont bien connus de la personne du métier. Par exemple, de manière nullement limitative, un tel indicateur de qualité peut être :
- un niveau de puissance reçue (RSRP), un rapport signal sur bruit plus interférence (SINR), mesuré au niveau d'une station de base, relative à la réception du signal émis par un appareil cellulaire rattaché à ladite station de base ;
- un niveau de puissance reçue (RSRP), ou un rapport signal sur bruit plus interférence (SINR), mesuré au niveau d'un appareil cellulaire rattaché à une station de base, relative à la réception du signal émis par ladite station de base
- un niveau de puissance reçue d'une ou des station(s) de base environnante(s), par exemple mesuré au niveau d'au moins un appareil cellulaire ou d'une station de base
- etc.

Pour au moins une station de base, au moins un indicateur de qualité peut être mesuré par tout appareil, en tout endroit, au sein de la ou des cellules supportées par ladite station de base.

Par exemple, au moins un indicateur de qualité peut être mesuré au niveau de ladite station de base. Dans ce cas, la station de base peut être équipée d'au moins un capteur pour mesurer ledit indicateur de qualité, tel que par exemple le rapport signal/bruit d'un signal reçu, le niveau d'un signal reçu, etc.

Alternativement, ou en plus, au moins un indicateur de qualité peut être mesuré au niveau d'un appareil cellulaire rattaché à ladite station de base et transmis par ledit appareil cellulaire à ladite station de base. Dans ce cas, l'appareil cellulaire peut être équipé d'au moins un capteur pour mesurer ledit indicateur de qualité, tel que par exemple le rapport signal/bruit d'un signal reçu, le niveau d'un signal reçu, etc. L'indicateur de qualité mesuré peut être transmis à la station de base sur requête de la station de base, ou à l'initiative de l'appareil utilisateur.

Dans tous cas, au moins un indicateur de qualité peut être issu des échanges de protocole entre un appareil cellulaire et la station de base. Alternativement, ou en plus, au moins un indicateur de qualité peut être mesuré par un capteur au niveau de l'appareil cellulaire ou la station de base.

Au moins une action de reconfiguration d'une station de base peut être de toute nature.

De préférence, l'au moins action de reconfiguration d'une station de base peut comprendre une modification de fonctionnement de ladite station de base pour :
- éliminer, ou diminuer, une interférence en cours ; ou
- éviter une interférence potentielle, ou diminuer un risque d'interférence.

Suivant des modes de réalisation, au moins une action de reconfiguration d'une station de base peut comprendre un arrêt de ladite station de base. Ainsi, la station de base arrête d'émettre ce qui permet d'éliminer une interférence en cours, ou une interférence potentielle pouvant se produire, avec au moins une cellule supportée par une autre station de base.

Suivant des modes de réalisation, au moins une action de reconfiguration d'une station de base peut comprendre un arrêt d'une cellule de ladite station de base. Ainsi, la cellule arrête d'émettre ce qui permet d'éliminer une interférence en cours, ou une interférence potentielle pouvant se produire, avec au moins une cellule supportée par une autre station de base.

Pour au moins une station de base, l'extinction de ladite station de base, ou d'une cellule de ladite station de base, implique l'arrêt des communications cellulaires avec les appareils cellulaires. Cependant, ladite station de base, respectivement cellule, éteinte peut continuer à envoyer au moins un indicateur de fonctionnement pour permettre l'allumage, ou le rallumage, de ladite station de base en termes de communication cellulaire, c'est-à-dire de reprendre les communications cellulaires.

Suivant des modes de réalisation, au moins une action de reconfiguration d'une station de base peut comprendre une modification, et en particulier une diminution ou une limitation, de la puissance d'émission, et en particulier de la puissance d'émission maximale, de ladite station de base, ou d'au moins un appareil cellulaire rattaché à ladite station de base. Ainsi, le niveau d'émission de la station de base, respectivement de l'appareil cellulaire, est changé/ajusté, et en particulier réduit, ce qui permet d'éliminer, ou de diminuer, une interférence en cours, ou une interférence potentielle pouvant se produire.

Suivant des modes de réalisation, au moins une action de reconfiguration d'une station de base peut comprendre une modification, et en particulier une diminution ou une limitation, de la puissance d'émission, et en particulier de la puissance d'émission maximale, d'une cellule de ladite station de base, ou d'au moins un appareil cellulaire rattaché à ladite station de base. Ainsi, la cellule, respectivement l'appareil cellulaire, émet à un niveau de puissance différent, et particulier réduit, ce qui permet d'éliminer, ou de diminuer, une interférence en cours, ou une interférence potentielle pouvant se produire.

Suivant des modes de réalisation, au moins une action de reconfiguration d'une station de station de base peut comprendre une modification d'un plan de fréquence de ladite station de base. Par exemple, au moins une partie des fréquences utilisées par ladite station de base peut être changée ce qui permet d'éliminer une interférence en cours, ou une interférence potentielle pouvant se produire, avec au moins une autre station de base.

Suivant des modes de réalisation, au moins une action de reconfiguration d'une station de station de base peut comprendre une modification d'un plan de fréquence d'une cellule de ladite station de base. Par exemple, au moins une partie des fréquences utilisées par ladite cellule peut être changée ce qui permet d'éliminer une interférence en cours, ou une interférence potentielle pouvant se produire, avec au moins une autre station de base.

La modification d'un plan de fréquence peut comprendre toute règle de partage du spectre, une modification d'au moins une règle d'accès à la ressource de radio ou de partage du spectre, etc.

Suivant des modes de réalisation, au moins une action de reconfiguration d'une station de base peut comprendre une modification d'une modulation, ou d'un codage, réalisé(e) par ladite station de base. Par exemple, la modulation ou le codage peut être arrêté(e), ou réalisée selon un autre algorithme ou une autre règle, pour éliminer, ou diminuer, une interférence en cours, ou une interférence potentielle pouvant se produire, avec au moins une autre station de base. Par exemple la modification de la modulation peut comprendre :
- une modification du MCS (Modulation and Coding Scheme) qui permet d'effectuer un compromis entre la robustesse de décodage et le débit,
- un changement de timing (par exemple en TDD, on peut modifier la répartition du trafic montant et descendant),
- un changement de la configuration des signaux de référence (dits RS) permettant le décodage cohérent du canal radio.

Suivant des modes de réalisation, au moins une action de reconfiguration d'une station de station de base peut comprendre une modification d'une modulation, ou d'un codage, réalisé(e) par une cellule de ladite station de base. Par exemple, la modulation ou le codage peut être arrêté(e), ou réalisée selon un autre algorithme ou une autre règle, pour éliminer, ou diminuer, une interférence en cours, ou une interférence potentielle pouvant se produire. Par exemple la modification de la modulation peut comprendre :
- une modification du MCS (Modulation and Coding Scheme) qui permet d'effectuer un compromis entre la robustesse de décodage et le débit,
- un changement de timing (par exemple en TDD, on peut modifier la répartition du trafic montant et descendant),
- un changement de la configuration des signaux de référence (dits RS) permettant le décodage cohérent du canal radio

Suivant des modes de réalisation, au moins une action de reconfiguration d'une station de station de base peut comprendre une modification de la position de ladite station de base.

La position modifiée peut être la position actuelle de la station de base, ou une position à venir de ladite station de base à un instant futur.

Suivant des modes de réalisation, au moins une action de reconfiguration d'une station de station de base peut comprendre une modification d'au moins une antenne de ladite station de base. Par exemple, ladite action de reconfiguration peut comprendre une modification de la position de ladite antenne, de l'ouverture de ladite antenne, de l'orientation de ladite antenne, etc.

Suivant des modes de réalisation, au moins une action de reconfiguration d'une station de base peut comprendre un allumage de ladite station de base.

Suivant des modes de réalisation, au moins une action de reconfiguration d'une station de base peut comprendre un allumage d'une cellule de ladite station de base.

Dans ces cas, la puissance d'émission peut être ajustée pour être faible, et/ou augmentée au fur et à mesure que le niveau d'interférence diminue.

Suivant des modes de réalisation, au moins une action de reconfiguration d'une station de base peut comprendre une modification de la synchronisation temporelle d'au moins une cellule de ladite station, en particulier par rapport à une cellule d'une autre station.

Cette modification de synchronisation peut consister en, ou comprendre, une création d'un décalage de synchronisation entre lesdites cellules.

Alternativement, cette modification de synchronisation peut consister en, ou comprendre, une suppression d'un décalage de synchronisation entre lesdites cellules.

Bien entendu, l'invention n'est pas limitée aux exemples d'actions de reconfiguration qui viennent d'être décrits et d'autres actions de reconfiguration peuvent être mises en oeuvre sans sortir du cadre de la présente invention.

Suivant des modes de réalisation, le procédé selon l'invention peut comprendre une étape de transfert intercellulaire d'au moins un appareil cellulaire attaché à une station de base, avant l'exécution d'une action de reconfiguration de ladite station de base.

Dans ce cas, ladite étape de transfert intercellulaire peut être réalisée, ou du moins déclenchée, pour le ou chaque appareil cellulaire concerné, avant de déclencher l'exécution de l'action de reconfiguration de la station de base. Ainsi, le procédé selon l'invention permet de réaliser une gestion du fonctionnement du réseau cellulaire mobile, en limitant ou en évitant, toute perte de service pour ledit au moins un appareil cellulaire.

Suivant des exemples de réalisation nullement limitatifs, le transfert intercellulaire peut notamment comprendre au moins une des actions suivantes :
- handover: un appareil cellulaire connecté, donc en trafic, peut changer de cellule à la demande de la station de base tout en maintenant le trafic ;
- redirection: un appareil cellulaire connecté peut changer de cellule à la demande de la station de base en libérant la connexion (retour dans l'état de veille). La redirection est utilisée actuellement pour le changement de technologie de RAN (ex: 4G->3G) ou de PLMN (ex: en roaming), par exemple ;
- re-sélection : un appareil cellulaire attaché en veille peut changer de cellule suite à la modification des informations de configuration de la cellule diffusées sur le canal de broadcast par la station de base ;
- etc

Suivant des modes de réalisation, l'étape de détermination d'action(s) de reconfiguration peut être réalisée par un équipement commun à toutes les stations de base.

Dans ce cas, le procédé selon l'invention comprend en outre une transmission d'indicateur(s) de fonctionnement depuis au moins une station de base vers ledit équipement commun.

Ainsi, il est possible de réaliser une gestion globale, plus efficace et plus adaptée, du réseau cellulaire mobile car il est possible d'avoir une vue globale dudit réseau cellulaire mobile pour la détermination, et la mise en oeuvre, de la ou des actions de reconfiguration d'une ou plusieurs stations de base du réseau cellulaire mobile.

L'équipement commun peut être localisé en toute position géographique.

Suivant des modes de réalisation, l'équipement commun peut être local à une des stations de base du réseau cellulaire, telle que par exemple une station de base mobile ou une station de base fixe.

Alternativement, l'équipement commun peut être distant de toutes les stations de base. Dans ce cas, l'équipement commun peut être disposé au niveau d'un site central distant desdites stations de base, ou dans le cloud.

La communication entre l'équipement commun et au moins une, en particulier chaque, station de base peut être réalisée selon toute technique connue.

La communication entre l'équipement commun et au moins une, en particulier chaque, station de base peut être réalisée au travers d'une liaison de communication de type backhaul.

La communication entre l'équipement commun et au moins une, en particulier chaque, station de base peut être réalisée au travers d'une liaison sans fil, spécifique ou non, tel qu'une liaison satellitaire.

Avantageusement, le procédé selon l'invention peut comprendre une étape de traitement d'au moins un indicateur de fonctionnement relatif à une station de base au niveau de ladite station de base, avant transmission audit équipement commun.

Un tel traitement peut comprendre tout type de traitement mathématique tel que par exemple un filtrage, un moyennage, etc. Un tel traitement permet de diminuer le temps, et/ou les ressources, de traitement de donnés au niveau de l'équipement commun. Cela permet aussi de diminuer la quantité de données à transmettre à l'équipement commun.

Un tel traitement peut comprendre tout type de traitement de données signal tel que par exemple un codage de données, une compression de données, etc. Un tel traitement permet de diminuer le volume de données à transmettre à l'équipement commun, et/ou de sécuriser les données transmises.

L'au moins une action de reconfiguration peut être déterminée de toute manière adéquate.

Au moins une action de reconfiguration peut être déterminée par un modèle d'intelligence artificielle, modèle d'IA, permettant de minimiser le niveau d'interférence, en déterminant les actions de configuration optimales à partir des paramètres de fonctionnement. Ce modèle peut être basé sur des règles préprogrammées, ou entraîné durant une phase d'apprentissage non supervisé ou d'apprentissage supervisé. Dans ce cas, l'au moins un indicateur de fonctionnement collecté est entré dans ledit modèle d'IA qui indique une ou plusieurs actions de reconfiguration pour une ou plusieurs stations de base.

Un tel modèle d'IA peut être tout type de modèle, tel qu'un réseau de neurones, une machine à vecteurs de support, etc.

Un tel modèle d'IA peut être préalablement entraîné avec une base de jeux de données d'entrainement, chaque jeu d'entrainement comprenant :
- un ensemble d'indicateurs de fonctionnement relatifs à des stations de base d'un réseau cellulaire mobile, et
- un ensemble d'au moins une action de reconfiguration d'au moins une desdites stations de base dudit réseau cellulaire mobile.

Au moins un jeu d'entrainement peut être simulé, ou collecté en fonctionnement réel.

Le modèle d'IA peut être un modèle générique applicable à tout réseau cellulaire mobile.

Le modèle d'IA peut être un modèle spécifique au réseau cellulaire mobile.

Le modèle d'IA peut prendre en compte d'autres paramètres que les indicateurs de fonctionnement, tel que par exemple la nature de la zone sur laquelle le réseau cellulaire mobile est déployé : zone urbaine, zone semi-urbaine, zone rurale, zone montagneuse, etc.

Le modèle d'IA peut prendre en entrée les indicateurs fonctionnement d'une station de base à tour de rôle et indiquer au moins une action de reconfiguration pour ladite station de base uniquement.

Le modèle d'IA peut prendre en entrée les indicateurs de fonctionnement pour toutes les stations de base en même temps et indiquer la ou les actions de reconfiguration pour toutes les stations de base concernées.

Au moins une action de reconfiguration peut être déterminée par un simulateur de fonctionnement du réseau cellulaire mobile.

Dans ce cas, un modèle numérique du réseau cellulaire est créé. Ce modèle est utilisé pour simuler le fonctionnement dudit réseau cellulaire avec les indicateurs de fonctionnement collectés, pour déterminer une ou plusieurs actions de reconfiguration pour une ou plusieurs stations de base.

Au moins une action de reconfiguration peut être déterminée par au moins une relation prédéterminée. Une telle relation peut prendre en entrée au moins un indicateur de fonctionnement d'au moins une station de base et indiquer au moins une action de reconfiguration d'au moins une station de base.

Suivant un autre aspect de la présente invention, il est proposé un système comprenant des moyens configurés pour mettre en oeuvre le procédé selon l'invention.

Le système peut comprendre, en terme(s) de configuration(s) et/ou de composant(s) physique(s) et/ou de programme(s) d'ordinateur(s), au moins une, ou une combinaison quelconque d'au moins deux, des caractéristiques optionnelles décrites plus haut en référence au procédé selon l'invention et qui ne seront pas reprises ici en détail par soucis de concision.

Suivant des modes de réalisation, le système peut comprendre un équipement central configuré pour :
- recevoir au moins un indicateur de fonctionnement, depuis au moins une, et en particulier chaque, station de base,
- traiter l'au moins un indicateur de fonctionnement reçu pour déterminer au moins une action de reconfiguration à mettre en oeuvre au niveau d'au moins une station de base, et
- transmettre au moins une action de configuration à au moins une station de base pour sa mise en oeuvre.

L'équipement central peut se trouver au niveau d'un site central distant des stations de base du réseau cellulaire mobile, voire dudit réseau cellulaire mobile.

Alternativement, l'équipement central peut se trouver au niveau d'une des stations de base du réseau cellulaire mobile.

Suivant des modes de réalisation, le système selon l'invention peut comprendre, au niveau d'au moins une, et en particulier de chaque, station de base du réseau cellulaire mobile, un équipement, dit équipement de station, configuré pour :
- collecter au moins un indicateur de fonctionnement,
- optionnellement traiter, au niveau de ladite station de base, le ou les indicateurs de fonctionnement collectés,
- transmettre le ou les indicateurs de fonctionnement collectés, optionnellement après traitement desdits indicateurs, à l'équipement central.

Suivant des modes de réalisation, l'équipement de station d'au moins une station de base peut en outre être configuré pour :
- recevoir au moins une action de configuration de ladite station de base, et
- appliquer ladite action de reconfiguration au niveau de ladite station de base.

Alternativement, ces actions/opérations peuvent être réalisées par une unité de gestion de la station de base, et non par l'équipement de station

Suivant un autre aspect de la présente invention, il est proposé un réseau cellulaire mobile comprenant des stations de base dont au moins une est une station de base mobile, ledit réseau cellulaire comprenant :
- des moyens configurés pour mettre en oeuvre le procédé selon l'invention ;
- un système selon la présente invention.

Le réseau cellulaire selon l'invention peut comprendre au moins une, ou une combinaison quelconque d'au moins deux, des caractéristiques optionnelles décrites plus haut en référence au procédé selon l'invention et/ou au système selon l'invention, et qui ne seront pas reprises ici en détail par soucis de concision.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitatif d'un système selon l'invention ; et
- la FIGURE 3 est une représentation schématique d'un exemple de réalisation non limitatif d'un réseau cellulaire mobile selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle, sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

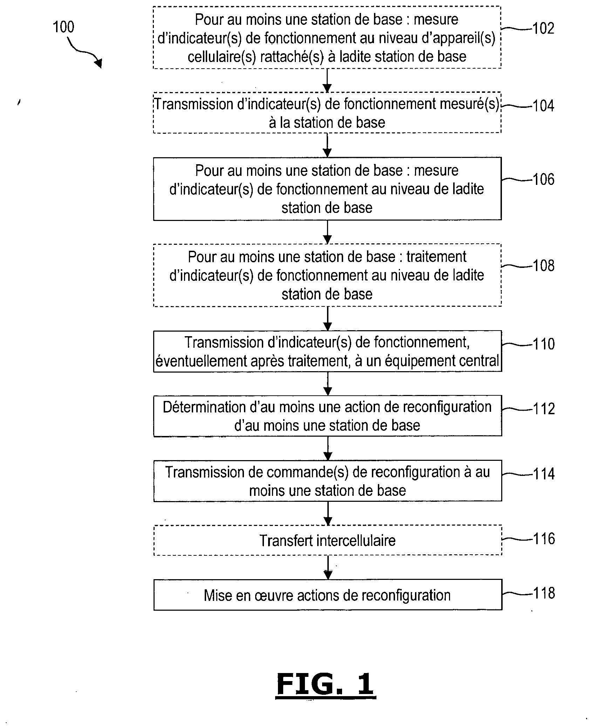

La FIGURE 1 est une représentation schématique d'un exemple de réalisation non limitatif d'un procédé selon l'invention.

Le procédé 100 de la FIGURE 1 peut être utilisé pour gérer le fonctionnement d'un réseau cellulaire mobile comprenant au moins deux stations de base, dont au moins une est une station de base mobile.

Toutes les stations de base du réseau cellulaire mobile peuvent être mobiles. Alternativement, le réseau cellulaire mobile peut comprendre une ou plusieurs stations de base fixe.

Le procédé 100 comprend une étape 102, optionnelle, de mesure d'au moins un indicateur de fonctionnement au niveau d'au moins un appareil cellulaire rattaché à une station de base. Chaque indicateur de fonctionnement mesuré au niveau de l'appareil cellulaire peut être de tout type d'indicateur de qualité, relatif à la qualité de la communication entre l'appareil cellulaire et ladite station de base. Par exemple, un indicateur de qualité mesuré peut être le rapport signal/bruit d'un signal reçu, le niveau d'un signal reçu, la distance entre l'appareil cellulaire et ladite station de base, etc.

Pour au moins un appareil cellulaire, l'étape 102 peut être réalisée sur demande de la station de base à laquelle il est rattaché.

Pour au moins un appareil cellulaire, l'étape 102 peut être réalisée sur initiative dudit appareil cellulaire, sans qu'il y ait une demande de la part de la station de base à laquelle il est rattaché.

Pour au moins un appareil cellulaire, l'étape 102 peut être réalisée ponctuellement. Alternativement, pour au moins un appareil cellulaire, l'étape 102 peut être réalisée en continue.

L'étape 102 peut être réalisée par au moins un, en particulier chaque, appareil cellulaire rattaché au réseau cellulaire mobile.

L'étape 102 peut être réalisée pour au moins une station de base, c'est-à-dire par au moins un appareil rattaché à ladite station de base. L'étape 102 peut être réalisée pour chaque station de base. Dans ce cas, pour chaque station de base, l'étape 102 est réalisée par au moins un appareil cellulaire rattaché à ladite station de base.

L'étape 102 peut être réalisée pour une partie seulement des stations de base. En d'autres termes, l'étape 102 peut ne pas être réalisée par les appareils rattachés à une première station de base, et être réalisée par au moins un appareil cellulaire rattaché à une deuxième station de base.

Dans tous les cas, l'étape 102 fournit, pour au moins un appareil cellulaire rattaché à une station de base, au moins un indicateur de qualité relatif à la qualité de la communication entre ledit appareil cellulaire et ladite station de base.

Lors d'une étape 104, les indicateurs de fonctionnement mesurés par les appareils cellulaires rattachés à une station de base sont transmis à ladite station de base. Pour au moins un appareil cellulaire, cette transmission peut être réalisée à l'initiative dudit appareil cellulaire, ou à la demande de la station de base.

L'étape 104 peut être réalisée pour au moins une station de base.

Alternativement, l'étape 104 peut être réalisée pour chaque station de base.

Pour au moins un appareil cellulaire, la transmission d'indicateur(s) de fonctionnement peut être réalisée en utilisant la connexion sans fil entre ledit appareil cellulaire et la station de base à laquelle il est rattaché. Bien entendu, la transmission peut être réalisé en utilisant d'autres modes de communication, tel que par exemple une communication satellitaire.

Lors d'une étape 106, pour au moins une station de base, au moins un indicateur de fonctionnement peut être mesuré au niveau de ladite station de base.

L'indicateur de fonctionnement est relatif au fonctionnement de ladite station de base. L'indicateur de fonctionnement peut comprendre au moins une donnée relative à la position de ladite station de base, telle que par exemple :
- position géographique actuelle de la station de base,
- position géographique à venir de la station de base,
- vitesse de déplacement de la station de base,
- direction de déplacement de la station de base,
L'indicateur de fonctionnement peut comprendre au moins un indicateur de qualité relatif à la qualité de la communication avec ladite station de base, tel que par exemple :
- un rapport de signal sur bruit d'un signal reçu d'un appareil cellulaire rattaché à la station de base,
- une puissance d'un signal reçu d'un appareil cellulaire rattaché à la station de base,
- un nombre d'appareils cellulaires attachés en veille à chaque cellule de la station de base,
- un nombre d'appareils cellulaires connectés, c'est-à-dire en trafic, à chaque cellule de la station de base,
- etc.

L'étape 106 peut être réalisée par une partie seulement des stations de base. L'étape 106 peut être réalisée par chacune des stations de base.

Lors d'une étape optionnelle 108, réalisée au niveau d'au moins une station de base, le ou les indicateurs de fonctionnement, peuvent subir un traitement numérique, par exemple pour :
- crypter au moins une partie des indicateurs de fonctionnement,
- compresser au moins une partie des indicateurs de fonctionnement,
- filtrer lesdits indicateurs de fonctionnement,
- déduire au moins un nouvel indicateur, ou une valeur moyenne, pour tel ou tel indicateur, en fonction des indicateurs de fonctionnement collectés,
- etc.
Le traitement peut être réalisé avec un ou des algorithmes/relations de traitement prédéterminé(e)s.

Lors d'une étape 110, réalisée par au moins une station de base, les indicateurs de fonctionnement sont transmis à un équipement central.

Pour au moins une station de base, cette transmission peut être réalisée à l'initiative dudit équipement central, ou à l'initiative de ladite station de base.

Pour au moins une station de base, la transmission d'indicateur(s) de fonctionnement peut être réalisée en utilisant une liaison sans fil entre ladite station de base et ledit équipement. Par exemple, la transmission d'indicateur(s) de fonctionnement peut être réalisée en utilisant une liaison satellitaire. Suivant encore un autre exemple, la transmission d'indicateur(s) de fonctionnement peut être réalisée en utilisant une liaison backhaul du réseau cellulaire mobile.

Lors d'une étape 112, les indicateurs de fonctionnement collectés depuis une ou plusieurs, voire toutes les, stations de base du réseau cellulaire mobile sont traités pour déterminer au moins une action de reconfiguration pour au moins une station de base.

Au moins une action de reconfiguration peut être déterminée pour une seule station de base. Alternativement, a moins une action de reconfiguration peut être déterminée pour chacune de plusieurs stations de base du réseau cellulaire. Suivant encore une autre variante, au moins une action de reconfiguration peut être déterminée pour chacune de toutes les stations de base.

La ou chaque action de reconfiguration d'une station de base peut comprendre une modification de fonctionnement de ladite station de base pour :
- éliminer, ou diminuer, une interférence en cours ; ou
- éviter une interférence potentielle, ou diminuer un risque d'interférence.

Une action de reconfiguration d'une station de base peut comprendre, ou peut être :
- un arrêt de ladite station de base ou d'une cellule de ladite station de base ;
- un allumage de ladite station de base ou d'une cellule de ladite station de base ;
- une modification de la puissance d'émission de ladite station de base ou d'une cellule de ladite station de base ;
- une modification d'un plan de fréquence de ladite station de base ou d'une cellule de ladite station de base ;
- une modification d'une modulation, ou d'un codage, réalisé(e) par ladite station de base, ou par une cellule de ladite station de base ;
- une modification de la position de ladite station de base ;
- une modification de configuration d'au moins une antenne de ladite station de base ;
- une modification de la synchronisation temporelle d'au moins une cellule de ladite station de base par rapport à au moins une cellule d'une autre station de base ;
- etc.

Lors d'une étape 114, une commande de reconfiguration est transmise à chaque station de base concernée par au moins une action de reconfiguration. Cette commande comprend la ou les actions de reconfiguration à mettre en oeuvre dans ladite station de base.

Cette commande peut par exemple se présenter sous la forme d'un message de reconfiguration à appliquer à la station de base.

Cette commande peut être transmise à la station de base en utilisant la même liaison que celle utilisée lors de l'étape 110, ou une autre liaison sans fil avec ladite station de base.

Le procédé 100 peut comprendre une étape optionnelle 116 de transfert intercellulaire réalisée au niveau d'au moins une des stations de base concernées par une action de reconfiguration, optionnellement en fonction de l'action de reconfiguration à mettre en oeuvre.

Lors de cette étape 116, une ou plusieurs appareils cellulaires rattachés à la station de base sont transférés vers une autre cellule ou une autre station de base, selon une procédure classique de transfert intercellulaire, par exemple selon l'une des options décrites plus haut.

Après l'étape optionnelle 116, le procédé 100 comprend une étape 118 de réalisation de la ou de chaque action de reconfiguration par chaque station de base concernée par une reconfiguration.

Par exemple, au moins une cellule de la station de base peut être mise à l'arrêt. Alternativement, la station de base peut être mise à l'arrêt. Suivant encore un autre exemple, la puissance d'émission de la station de base peut être diminuée ou augmentée.

Au moins une action de reconfiguration peut être déterminée de toute manière adéquate.

Suivant des modes de réalisation, au moins une action de reconfiguration peut être déterminée par un modèle d'intelligence artificielle, modèle d'IA, préalablement entraîné pour cela. Dans ce cas, le ou les indicateurs de fonctionnement collectés peuvent être entrés dans ledit modèle d'IA qui fournit en sortie une ou plusieurs actions de reconfiguration pour une ou plusieurs stations de base. Un tel modèle peut être tout type de modèle, tel qu'un réseau de neurones, une machine à vecteurs de support, etc.

Le modèle d'IA peut prendre en entrée les indicateurs fonctionnement d'une station de base à tour de rôle et indiquer au moins une action de reconfiguration pour ladite station de base uniquement.

Le modèle d'IA peut prendre en entrée les indicateurs de fonctionnement pour toutes les stations de base en même temps et indiquer la ou les actions de reconfiguration pour toutes les stations de base concernées.

Suivant d'autres modes de réalisation, la ou les actions de reconfiguration peuvent être déterminées par un simulateur numérique simulant le fonctionnement du réseau cellulaire mobile.

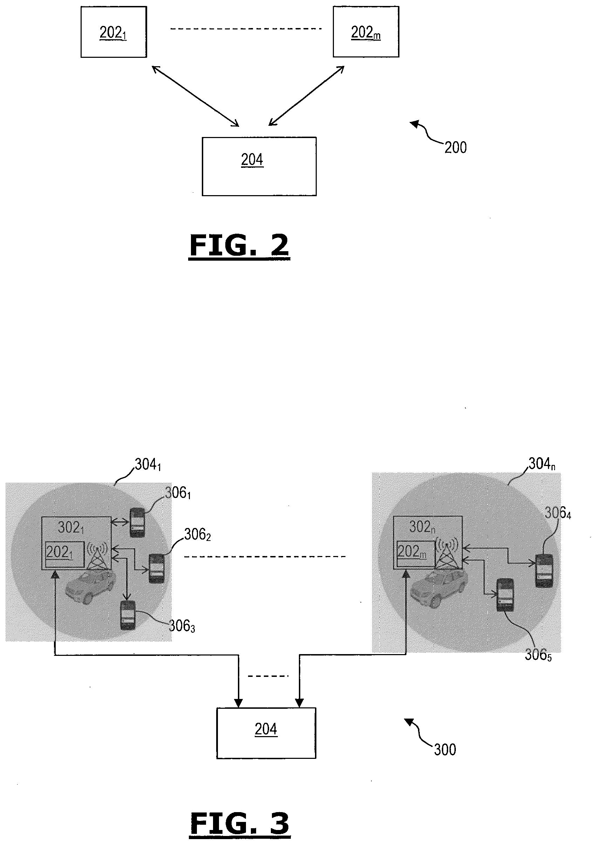

La FIGURE 2 est une représentation schématique d'un exemple de réalisation non limitatif d'un système selon l'invention.

Le système 200 de la FIGURE 2 peut être utilisé pour gérer le fonctionnement d'un réseau cellulaire mobile comprenant au moins deux stations de base, dont au moins une est une station de base mobile.

Le système 200 de la FIGURE 2 peut être utilisé pour mettre en oeuvre un procédé selon l'invention et en particulier le procédé 100 de la FIGURE 1, sans perte de généralité.

Dans la suite, pour la description du système selon l'invention, il est considéré que le réseau cellulaire mobile comprend n stations de base, avec n>2.

Le système 200 de la FIGURE 2 comprend m équipements 202₁-202ₘ, dits équipements de station, avec m≥1. Chaque équipement de station est prévu pour être disposé au niveau de, ou dans une, station de base. Si chaque station de base est équipée d'un équipement de station, alors le système comprend m=n équipements de station.

L'équipement de station 202ᵢ équipant une station de base est prévu pour collecter un ou plusieurs indicateurs de fonctionnement relatifs à ladite station de base et les transmettre vers un équipement central.

De manière optionnelle, l'équipement de station 202ᵢ peut être configuré pour mesurer un ou des indicateurs de fonctionnement relatifs à ladite station de base : dans ce cas, l'équipement de station 202ᵢ peut comprendre au moins un capteur pour mesurer le(s)dit(s) indicateur(s).

De manière optionnelle, l'équipement de station 202ᵢ peut être configuré pour appliquer une action de reconfiguration de la station qu'il équipe.

Suivant des modes de réalisation, l'équipement de station 202ᵢ peut être configuré pour :
- optionnellement, déclencher les étapes 102 et 104 ;
- réaliser les étapes 106 et 110, et optionnellement l'étape 108,
- optionnellement réaliser l'étape de transfert intercellulaire, et
- réaliser l'étape 118 ;
du procédé 100 de la FIGURE 1.

Le système 200 de la FIGURE 2 comprend un équipement central 204 qui peut être disposé sur un site central distant des stations de base, ou au niveau d'une des stations de base, du réseau cellulaire mobile.

L'équipement central 204 est prévu pour collecter un ou plusieurs indicateurs de fonctionnement d'au moins une, et en particulier chacune, des stations de base du réseau cellulaire mobile.

L'équipement central 204 est en outre configuré pour déterminer au moins une action de reconfiguration d'au moins une station de base en fonction d'indicateurs de fonctionnement collectés. Pour ce faire, l'équipement central peut exécuter au moins un modèle d'IA préalablement entraîné, et/ou un simulateur, etc.

Suivant des modes de réalisation, l'équipement central 204 peut être configuré pour réaliser les étapes 112 et 114 du procédé 100 de la FIGURE 1.

Au moins un des équipements 202₁-202ₘ et 204 peut être, ou peut comprendre, un module matériel, tel qu'un processeur, une puce électronique, etc.

Au moins un des équipements 202₁-202ₘ et 204 peut être, ou peut comprendre, un module logiciel, tel qu'un programme d'ordinateur.

Au moins un des équipements 202₁-202ₘ et 204 peut être, ou peut comprendre, une combinaison d'au moins un module logiciel et d'au moins un module matériel.

Au moins un des équipements de station 202₁-202ₘ peut être intégré dans la station de base qu'il équipe.

La FIGURE 3 est une représentation schématique d'un exemple de réalisation non limitatif d'un réseau cellulaire mobile selon l'invention.

Le réseau cellulaire 300 de la FIGURE 3 peut être utilisé pour réaliser une communication cellulaire suivant tout type de normes tels que 3G, ou 4G ou 5G, etc.

Le réseau cellulaire 300 comprend plusieurs stations de base 302₁-302ₙ, dont au moins une est mobile dans l'espace. Le réseau cellulaire 300 peut comprendre uniquement des stations de base mobiles. Alternativement, le réseau cellulaire 300 peut comprendre une ou plusieurs stations base mobile et une ou plusieurs stations de base immobiles ou fixes.

Dans l'exemple représenté, le réseau cellulaire 300 comprend n stations de base 302₁-302ₙ : certaines des stations de base sont mobiles et d'autres sont fixes.

Chaque station de base 302₁-302ₙ gère une ou plusieurs cellules 304₁-304ₙ. Sur la FIGURE 3, de manière nullement limitative, chaque station de base 302ᵢ gère une seule cellule 304ᵢ. Bien entendu, une station de base peut gérer une cellule ou plusieurs cellules. De plus, deux stations de base peuvent gérer un nombre de cellules différent.

Chaque station de base 302₁-302ₙ gère la communication avec un ou plusieurs appareils cellulaires, par exemple 5 appareils cellulaires 306₁-306₅, rattachés à ladite station de base. Ainsi, les appareils cellulaires 306₁-306₅ peuvent communiquer entre eux, et éventuellement avec d'autres appareils cellulaires, grâce aux stations de base 302₁-302ₙ et plus généralement au réseau cellulaire 300.

Chaque appareil cellulaire 306₁-306₅ peut être de tout type, tel que par exemple un téléphone, un Smartphone, une SmartWatch, une tablette, un modem cellulaire, etc. et, de manière générale, tout appareil de communication cellulaire pouvant se connecter à une station de base et établir une communication cellulaire selon l'une quelconque des normes de communication cellulaire connues ou à venir.

Le réseau cellulaire 300 comprend un système selon l'invention et en particulier le système 200 de la FIGURE 2.

Dans l'exemple représenté, chaque station de base 302ᵢ est équipé d'un équipement de station 202ᵢ de sorte que m=n.

L'équipement central 204 est localisé à distance des stations de base 302₁-302ₘ.

Suivant une variante non représentée, l'équipement central 204 peut être localisé au niveau de, ou intégré dans, une station de base. Dans ce cas, ladite station de base peut ne pas comprendre d'équipement de station. Alternativement, ladite station de base peut comprendre un équipement de station. Suivant une autre alternative, ladite station de base peut comprendre un équipement de station intégré, partiellement ou totalement, dans l'équipement central.

Bien entendu l'invention n'est pas limitée aux exemples qui viennent d'être décrits.

## Revendications

1. Procédé (100) de gestion d'un réseau cellulaire mobile (300) comprenant des stations de base (302₁-302ₙ) dont au moins une est une station de base mobile, ledit procédé (100) comprenant au moins une itération des étapes suivantes :
- collecte (110) d'au moins un indicateur de fonctionnement relatif à au moins une desdites stations de base (302₁-302ₙ) ;
- détermination (112), en fonction d'indicateur(s) de fonctionnement collecté(s), d'une action de reconfiguration d'au moins une desdites stations de base (302₁-302ₙ) ; et
- reconfiguration (118) de ladite au moins une station de base (302₁-302ₙ).

2. Procédé (100) selon la revendication précédente, **caractérisé en ce que**, pour au moins une station de base (302₁-302ₙ), au moins un indicateur de fonctionnement collecté est la position géographique de ladite station de base (302₁-302ₙ), ou d'au moins un appareil cellulaire rattaché à ladite station de base (302₁-302ₙ).

3. Procédé (100) selon l'une quelconque des revendications précédentes, **caractérisé en ce que**, pour au moins une station de base (302₁-302ₙ), un indicateur de fonctionnement collecté est un indicateur de qualité relatif à une communication entre ladite station de base (302₁-302ₙ) et au moins un appareil cellulaire (306₁-306₅) rattaché à ladite station de base (302₁-302ₙ).

4. Procédé (100) selon l'une quelconque des revendications précédentes, **caractérisé en ce que**, pour au moins une station de base (302₁-302ₙ), au moins un indicateur de qualité est :
- mesuré au niveau de ladite station de base (302₁-302ₙ), ou
- mesuré au niveau d'un appareil cellulaire (306₁-306₅) rattaché à ladite station de base (302₁-302ₙ) et transmis par ledit appareil cellulaire (306₁-306₅) à ladite station de base (302₁-302ₙ).

5. Procédé (100) selon l'une quelconque des revendications précédentes, **caractérisé en ce qu'**au moins une action de reconfiguration d'une station de base (302₁-302ₙ) comprend :
- un arrêt, ou un allumage, de ladite station de base (302₁-302ₙ), ou
- un arrêt, ou un allumage, d'une cellule de ladite station de base (302₁-302ₙ).

6. Procédé (100) selon l'une quelconque des revendications précédentes, **caractérisé en ce qu'**au moins une action de reconfiguration d'une station de base (302₁-302ₙ) comprend une modification de la puissance d'émission de ladite station de base (302₁-302ₙ), ou d'une cellule de ladite station de base (302₁-302ₙ).

7. Procédé (100) selon l'une quelconque des revendications précédentes, **caractérisé en ce qu'**au moins une action de reconfiguration d'une station de base (302₁-302ₙ) comprend une modification d'un plan de fréquence de ladite station de base (302₁-302ₙ), ou d'une cellule de ladite station de base (302₁-302ₙ).

8. Procédé (100) selon l'une quelconque des revendications précédentes, **caractérisé en ce qu'**au moins une action de reconfiguration d'une station de station de base (302₁-302ₙ) comprend une modification d'une modulation, ou d'un codage, réalisé(e) par ladite station de base (302₁-302ₙ), ou une cellule de ladite station de base (302₁-302ₙ).

9. Procédé (100) selon l'une quelconque des revendications précédentes, **caractérisé en ce qu'**au moins une action de reconfiguration d'une station de station de base (302₁-302ₙ) comprend une modification de la position de ladite station de base (302₁-302ₙ), et/ou d'au moins une antenne de ladite station de base (302₁-302ₙ.

10. Procédé (100) selon l'une quelconque des revendications précédentes, **caractérisé en ce qu'**il comprend une étape (116) de transfert intercellulaire d'au moins un appareil cellulaire (306₁-306₅) attaché à une station de base(302₁-302ₙ), avant l'exécution d'une action de reconfiguration de ladite station de base.

11. Procédé (100) selon l'une quelconque des revendications précédentes, **caractérisé en ce que** l'étape (112) de détermination d'action(s) de reconfiguration est réalisée par un équipement commun (204) à toutes les stations de base (302₁-302ₙ), ledit procédé (100) comprenant en outre une transmission (110) d'indicateur(s) de fonctionnement depuis au moins une station de base (302₁-302ₙ) vers ledit équipement commun (204).

12. Procédé (100) selon la revendication précédente, **caractérisé en ce que** l'équipement commun (204) est :
- local à une des stations de base (302₁-302ₙ) du réseau cellulaire (300), ou
- distant de toutes les stations de base (302₁-302ₙ).

13. Procédé (100) selon l'une quelconque des revendications 11 ou 12, **caractérisé en ce qu'**il comprend une étape (108) de traitement d'au moins un indicateur de fonctionnement relatif à une station de base (302₁-302ₙ) au niveau de ladite station de base (302₁-302ₙ), avant transmission audit équipement commun.

14. Système (200) comprenant des moyens (202₁-202ₘ,204) configurés pour mettre en oeuvre le procédé (100) selon l'une quelconque des revendications précédentes

15. Réseau cellulaire mobile (300) comprenant des stations de base (302₁-302ₙ) dont au moins une est une station de base mobile, ledit réseau cellulaire mobile (300) comprenant :
- des moyens configurés pour mettre en oeuvre le procédé (100) selon l'une quelconque des revendications 1 à 13.
- un système (200) selon la revendication 14.
